# EUROPÄISCHE PATENTSCHRIFT

(11) **EP 3 437 902 B1**
(45) Veröffentlichungstag und Bekanntmachung des Hinweises auf die Patenterteilung: **30.10.2019**
(21) Anmeldenummer: 18186448.9
(22) Anmeldetag: 31.07.2018
(51) Int. Cl.: B60C 29/02, B60C 23/04, B60C 29/00

(54) **REIFENVENTIL SOWIE SYSTEM MIT FELGE, REIFENVENTIL UND DICHTRING**
TYRE VALVE AND SYSTEM COMPRISING A RIM, TYRE VALVE AND SEALING RING
SOUPAPE DE PNEUMATIQUE AINSI QUE SYSTÈME COMPRENANT JANTE, SOUPAPE DE PNEUMATIQUE ET ANNEAU D'ÉTANCHÉITÉ

(30) Priorität: 31.07.2017 DE 102017117307
(43) Veröffentlichungstag der Anmeldung: 06.02.2019
(73) Patentinhaber: Huf Baolong Electronics Bretten GmbH, 75015 Bretten (DE)
(72) Erfinder: Arnoldo, Sven, 76316 Malsch (DE); Treit, Alexander, 74858 Aglasterhausen (DE); Dussinger, Axel, 74906 Bad Rappenau (DE); Gorenzweig, Igor, 42109 Wuppertal (DE); Gamer, Benedikt, 75045 Walzbachtal (DE); Dementyev, Yevgen, 42287 Wuppertal (DE); Seifert, Andre, 75181 Pforzheim (DE)
(74) Vertreter: Twelmeier Mommer & Partner

(56) Entgegenhaltungen:
- DE-A1-102015 210 461
- DE-U1- 20 015 467
- DE-U1-202006 005 269
- DE-U1-202014 103 121
- JP-A- 2014 008 935

## Beschreibung

Die Erfindung geht aus von einem System aus einer Felge, einem dazu passenden Reifenventil und einem Dichtring zum Abdichten zwischen Reifenventil und Felge mit den im Oberbegriff des Anspruchs 1 angegebenen Merkmalen, wie es aus der DE 20 2006 005 269 U1 sowie der DE 10 2015 210 461 A1 bekannt ist.

Bei einem aus der EP 1 831 036 B1 bekannten System weist das Reifenventil eine Ringnut auf, in der ein Dichtring liegt, um einen Spalt zwischen dem Reifenventil und der Felge abzudichten, an der das Reifenventil montiert ist. Die radial äußere Begrenzungswand der Ringnut stützt sich im montierten Zustand an der Felge ab und bildet so einen metallischen Anschlag. Das Reifenventil kann deshalb bei der Montage an einer Felge hohe Anzugmomente aufnehmen, ohne dass dies zu einer Beschädigung des Dichtrings führt. Das bekannte Reifenventil verbindet somit den Vorteil einer zuverlässigen Abdichtung zwischen Reifenventil und Felge mit dem Vorteil einer einfachen Montage.

Aufgabe der vorliegenden Erfindung ist es einen Weg aufzuzeigen, wie diese Vorteile noch besser bzw. kostengünstiger erreicht werden können.

Diese Aufgabe wird durch ein System aus Felge und Reifenventil mit den im Anspruch 1 angegebenen Merkmalen sowie durch ein Reifenventil gemäß Anspruch 7 gelöst. Vorteilhafte Weiterbildungen der Erfindung sind Gegenstand von Unteransprüchen.

Bei einem erfindungsgemäßen Reifenventil liegt der metallische Anschlag radial einwärts von der Ringnut, so dass im montierten Zustand, wenn der metallische Anschlag an der Felge anliegt, zwischen der radial äußeren Begrenzungswand der Ringnut und der Felge ein Spalt ist, in den hinein sich Material des Dichtrings hinein ausdehnen kann. Die Größe der Ringnut und das Volumen des Dichtrings müssen deshalb nicht mehr so genau aufeinander abgestimmt werden wie bei herkömmlichen Reifenventilen. Wenn das Volumen des Dichtrings größer ist als das für ihn in der Ringnut bzw. zwischen Reifenventil und Felge vorgesehene Volumen, kann überschüssiges Volumen des Dichtrings von dem Spalt zwischen der Felge und der radial äußeren Begrenzungswand der Ringnut aufgenommen werden. Das überschüssige Volumen des Dichtrings kann beispielsweise auf Fertigungstoleranzen beruhen oder durch thermische Ausdehnung entstehen. Eine vorteilhafte Weiterbildung der Erfindung sieht vor, dass das Reifenventil beim Einstecken in die Felgenbohrung mittels seiner Anschlagfläche in der Felgenbohrung zentriert wird. Auf diese Weise lässt sich die Montage weiter vereinfachen. Die Felgenbohrung kann dazu beispielsweise eine Stufenbohrung sein oder einen konischen Abschnitt aufweisen.

Erfindungsgemäß ist die metallische Anschlagfläche des Reifenventils konisch. Eine konische Anschlagfläche des Reifenventils ermöglicht einen metallischen Anschlag an einer dazu passend konischen Innenfläche einer Bohrung der Felge. Die konische Anschlagfläche eines erfindungsgemäßen Reifenventils ermöglicht eine vergrößerte metallische Kontaktfläche zwischen Reifenventil und Felge, die einen Durchtritt von Luft bereits wesentlich erschwert, so dass eine gute Abdichtung zwischen Reifenventil und Felge durch einen Dichtring noch leichter erreicht werden kann.

Weitere Einzelheiten und Vorteile der Erfindung werden an einem Ausführungsbeispiel unter Bezugnahme auf die beigefügten Zeichnungen erläutert. Es zeigen:
- Fig. 1: eine geschnittene Ansicht eines Reifenventils im vormontierten Zustand an eine Felge;
- Fig. 2: eine Detailansicht des Ausschnitts A von Fig. 1;
- Fig. 3: eine geschnittene Ansicht des Reifenventils im montierten Zustand an einer Felge; und
- Fig. 4: eine Detailansicht des Ausschnitts B von Fig. 3.

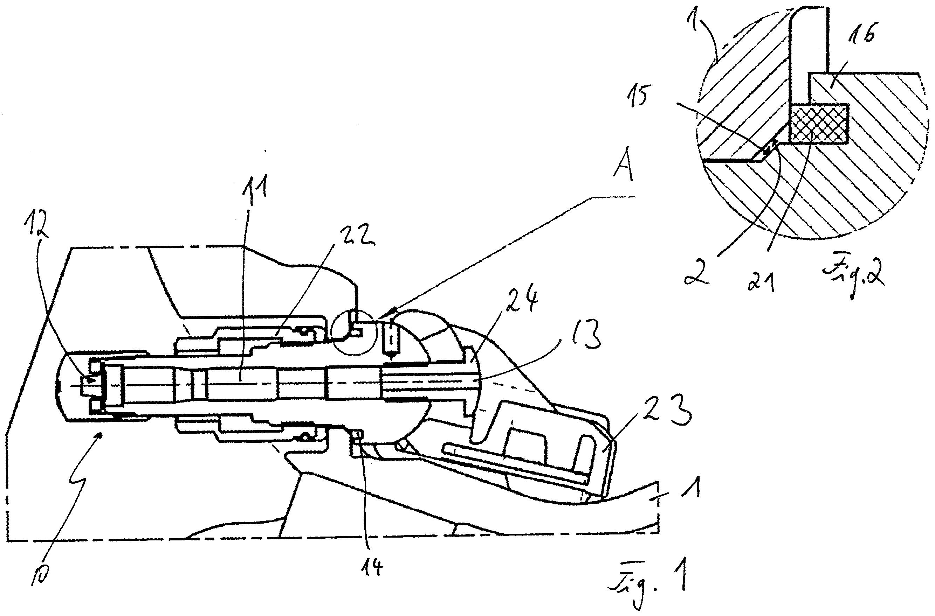

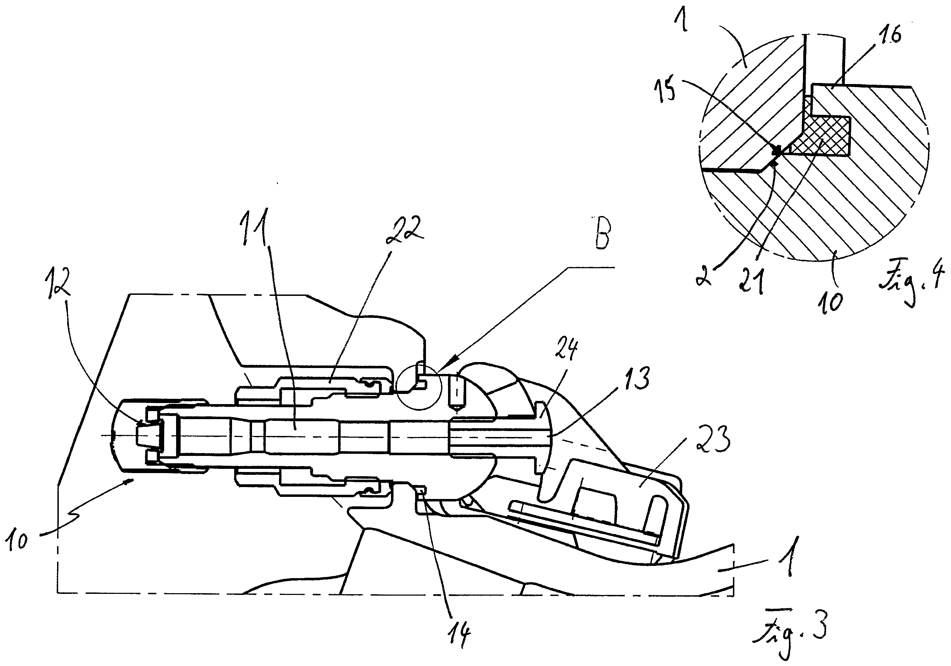

In Figur 1 ist eine Felge 1 mit einem daran vormontierten Reifenventil 10 dargestellt. In Figur 3 ist die Felge 1 mit dem daran montierten Reifenventil 10 dargestellt. Die Figuren 2 und 4 zeigen Detailansichten der Ausschnitte A zu Fig.1 bzw. B zu Fig. 3.

Das Reifenventil 10 steckt in einer Bohrung der Felge 1 und hat einen Luftkanal 11, der von einem Lufteinlass 12 zu einem Luftauslass 13 führt, sowie eine zu dem Lufteinlass 12 hin offene Ringnut 14 zur Aufnahme eines Dichtrings 21. Die Ringnut 14 und der Dichtring 21 sind in den Fig. 2 und 4 dargestellt, die eine Detailansicht des Bildausschnitts A von Fig. 1 bzw. B von Fig. 3 zeigen.

Das Reifenventil 10 hat eine metallische Anschlagfläche 15, die bei dem gezeigten Ausführungsbeispiel konisch geformt ist. Die Bohrung der Felge 1 hat zu der Anschlagfläche 13 passende konische Innenfläche 2, so dass das Reifenventil beim Einstecken in die Felgenbohrung durch die metallische Anschlagfläche 15 in der Felgenbohrung zentriert wird.

Im montierten Zustand liegt die konische Anschlagfläche 15 des Reifenventils 10 an der konischen Innenfläche 2 der Felgenbohrung an. In diesem Zustand bleibt zwischen der radial äußeren Wand 16 der Ringnut 14 und der Felge 1 ein Spalt. Die Höhe der Wand 16, welche die Ringnut 14 auf ihrer radial äußeren Seite begrenzt, ist also so bemessen, dass zwischen der Wand 16 und der Felge 1 ein Spalt bleibt, wenn die Anschlagfläche 15 an der konischen Innenfläche 2 der Felge 1 anliegt. In axialer Richtung von dem Luftauslass 13 aus gesehen endet die Wand 16 somit vor der Anschlagfläche 15.

Material des in der Ringnut 14 angeordneten Dichtrings 21 kann in den Spalt zwischen der Wand 16 und der Felge 1 wandern. Der Spalt kann so Fertigungstoleranzen oder eine thermische Ausdehnung des Dichtrings 21 kompensieren, indem sich Material des Dichtrings 21 unter Druck in den Spalt hinein ausdehnt.

Wenn der Dichtring 21 von dem Reifenventil 10 gegen die Felge 1 gedrückt wird, beispielsweise indem eine Mutter 22 die Anschlagfläche 15 des Reifenventils 10 gegen die konische Innenfläche 2 der Felge 1 zieht, verformt sich der Dichtring 21. Dabei kann dann Material des Dichtrings 21 in den Spalt zwischen der Wand 15 und der Felge 1 ausweichen.

Die konische Anschlagfläche 15 ist radial einwärts von der Ringnut 14 angeordnet und grenzt an diese an. An die konische Innenfläche 2 der Felge 1 kann ein zylindrischer Abschnitt der Felgenbohrung anschließen. Die konische Innenfläche 2 der Felgenbohrung erstreckt sich in radialer Richtung weiter nach außen als die konische Anschlagfläche 15 des Reifenventils 10. Beispielsweise kann die konische Innenfläche 2 eine in radialer Richtung gemessene Breite haben, die wenigstens das 1,5-fache der in radialer Richtung gemessenen Breite der konische Anschlagfläche 15 beträgt, vorzugsweise das Doppelte oder mehr. Auf diese Weise kann der Dichtring 21 auch in den konischen Ringraum der Felgenbohrung hineinragen und so ein verbesserte Abdichtung bewirken. Der Dichtring 21 kann dazu als eine Formdichtung ausgebildet sein.

An dem Reifenventil 1 kann eine Reifendrucküberwachungseinheit 23, die einen Drucksensor und einen Sender enthält, befestigt sein, beispielsweise mittels einer Hohlschraube 24.

### Bezugszeichenliste

- 1: Felge
- 2: konische Innenfläche
- 10: Reifenventil
- 11: Luftkanal
- 12: Lufteinlass
- 13: Luftauslass
- 14: Ringnut
- 15: konische Anschlagfläche
- 16: Wand
- 21: Dichtring
- 22: Mutter
- 23: Reifendrucküberwachungseinheit
- 24: Hohlschraube

## Patentansprüche

1. System mit
einer Felge (1), die eine Felgenbohrung aufweist,
einem in die Felgenbohrung passenden Reifenventil (10), das einen Luftkanal (11), der von einem Lufteinlass (12) zu einem Luftauslass (13) führt, sowie eine in Richtung des Lufteinlasses (12) offene Ringnut aufweist (14), und
einem Dichtring (21) zum Abdichten zwischen Reifenventil (10) und Felge (1), wobei das Reifenventil (10) eine metallische Anschlagfläche (15) aufweist, die im montierten Zustand an der Felge (1) anliegt, und
die metallische Anschlagfläche (15) radial einwärts von der Ringnut (14) angeordnet ist, **dadurch gekennzeichnet, dass**
die metallische Anschlagfläche (15) konisch ist.

2. System nach Anspruch 1, **dadurch gekennzeichnet, dass** das Reifenventil (10) beim Einstecken in die Felgenbohrung mittels der metallischen Anschlagfläche (15) in der Felgenbohrung zentriert wird.

3. System nach einem der vorstehenden Ansprüche **dadurch gekennzeichnet, dass** die metallische Anschlagfläche (15) konisch ist und die Felgenbohrung eine dazu passende konische Innenfläche (2) hat.

4. System nach Anspruch 3, **dadurch gekennzeichnet, dass** das an die konische Innenfläche (2) der Felgenbohrung ein zylindrischer Abschnitt anschließt.

5. System nach einem der vorstehenden Ansprüche 3 und 4 **dadurch gekennzeichnet, dass** sich die konische Innenfläche (2) radial weiter nach außen erstreckt als die metallische Anschlagfläche (15) des Reifenventils (10).

6. System nach einem der vorstehenden Ansprüche 3 bis 5 **dadurch gekennzeichnet, dass** die konische Innenfläche (2) eine in radialer Richtung gemessenes Breite hat, die wenigstens das 1,5-fache der in radialer Richtung gemessenen Breite der metallischen Anschlagfläche (15) beträgt, vorzugsweise wenigstens das Doppelte.

7. Reifenventil zur Montage an einer Felge (1), mit
einem Luftkanal (11), der von einem Lufteinlass (12) zu einem Luftauslass (13) führt,
einer in Richtung des Lufteinlasses (13) offenen Ringnut (14) zur Aufnahme eines Dichtrings (21), und
einer metallischen Anschlagfläche (15) zum Anschlagen an der Felge (1), wobei die Anschlagfläche (15) radial einwärts von der Ringnut (14) angeordnet ist, **dadurch gekennzeichnet, dass** die Anschlagfläche (15) konisch ist.

8. Reifenventil nach Anspruch 7, **dadurch gekennzeichnet, dass** die metallische Anschlagfläche (15) an die Ringnut (14) angrenzt.

9. Reifenventil nach einem der Ansprüche 7 bis 8, **dadurch gekennzeichnet, dass** die Ringnut (14) auf ihrer radial äußeren Seite von einer Wand (16) begrenzt wird, die in axialer Richtung von dem Luftauslass (13) aus gesehen endet, bevor die metallische Anschlagfläche (15) beginnt.

## Claims

1. A system comprising
a rim (1) comprising a rim hole,
a tire valve (10) that fits into the rim hole and has an air channel (11) leading from an air inlet (12) to an air outlet (13), plus an annular groove (14) opening toward the air inlet (12), and
a sealing ring (21) for sealing between the tire valve (10) and the rim (1), wherein the tire valve (10) comprises a metal stop surface (15) which in the mounted state abuts on the rim (1) and
wherein the metal stop surface (15) is arranged radially inwardly from the annular groove (14),
**characterized in that** the metal stop surface (15) is conical.

2. The system according to Claim 1, **characterized in that** the tire valve (10), as it is being inserted in the rim hole, is centered in the rim hole by means of the metal stop surface (15).

3. The system according to any one of the preceding claims, **characterized in that** the metal stop surface (15) is conical and that the rim hole has a matching conical inner surface (2).

4. The system according to Claim 3, **characterized in that** a cylindrical section adjoins the conical inner surface (2) of the rim hole.

5. The system according to any one of Claims 3 and 4, **characterized in that** the conical inner surface (2) extends radially outwards further than the metal stop surface (15) of the tire valve (10).

6. The system according to any one of Claims 3 to 5, **characterized in that** the conical inner surface (2) has a width, measured in a radial direction, which is at least 1.5 times, preferably at least twice the width, measured in a radial direction, of the metal stop surface (15).

7. A tire valve for mounting on a rim (1), comprising
an air channel (11) leading from an air inlet (12) to an air outlet (13),
an annular groove (14) opening toward the air inlet (13) for receiving a sealing ring (21), and
a metal stop surface (15) for abutment on the rim (1), wherein the stop surface (15) is arranged radially inward from the annular groove (14), **characterized in that** the stop surface (15) is conical.

8. The tire valve according to Claim 7, **characterized in that** the metal stop surface (15) borders the annular groove (14).

9. The tire valve according to any one of Claims 7 to 8, **characterized in that** the annular groove (14) is delimited on its radially outer side by a wall (16) which, seen in an axial direction from the air outlet (13), ends before the metal stop surface (15) begins.

## Revendications

1. Système comportant
une jante (1) qui présente un alésage de jante,
une valve de pneu (10) qui s'ajuste dans l'alésage de jante et qui présente un canal à air (11) qui va d'une admission d'air (12) vers une évacuation d'air (13), de même qu'une rainure annulaire (14) ouverte en direction de l'admission d'air (12), et
une bague d'étanchéité (21) pour assurer l'étanchéité entre la valve de pneu (10) et la jante (1),
la valve de pneu (10) présentant une surface de butée métallique (15) qui, à l'état monté, repose au niveau de la jante (1), et
la surface de butée métallique (15) étant disposée radialement vers l'intérieur de la rainure annulaire (14),
**caractérisé en ce que**
la surface de butée métallique (15) est conique.

2. Système selon la revendication 1, **caractérisé en ce que** lors de l'insertion dans l'alésage de jante, la valve de pneu (10) est centrée dans l'alésage de jante au moyen de la surface de butée métallique (15).

3. Système selon une des revendications précédentes, **caractérisé en ce que** la surface de butée métallique (15) est conique et que l'alésage de jante comporte une surface intérieure conique (2) adaptée à celle-ci.

4. Système selon la revendication 3, **caractérisé en ce qu'**une section cylindrique se raccorde à la surface intérieure conique (2) de l'alésage de jante.

5. Système selon une des revendications précédentes 3 et 4, **caractérisé en ce que** la surface intérieure conique (2) s'étend plus loin radialement vers l'extérieur que la surface de butée métallique (15) de la valve de pneu (10).

6. Système selon une des revendications précédentes 3 à 5, **caractérisé en ce que** la surface intérieure conique (2) a une largeur mesurée dans le sens radial qui correspond au moins 1,5 fois, de préférence au moins le double, de la largeur mesurée dans le sens radial de la surface de butée métallique (15).

7. Valve de pneu destinée à être montée sur une jante (1), comportant un canal à air (11) qui va d'une admission d'air (12) à une évacuation d'air (13),
une rainure annulaire (14) ouverte en direction de l'admission d'air (13) et destinée à recevoir une bague d'étanchéité (21), et
une surface de butée métallique (15) destinée à buter contre la jante (1),
la surface de butée (15) étant disposée radialement vers l'intérieur de la rainure annulaire (14), **caractérisée en ce que** la surface de butée (15) est conique.

8. Valve de pneu selon la revendication 7, **caractérisée en ce que** la surface de butée métallique (15) est adjacente à la rainure annulaire (14).

9. Valve de pneu selon une des revendications 7 à 8, **caractérisée en ce que** la rainure annulaire (14) est limitée sur sa face radialement extérieure par une paroi (16) qui se termine dans le sens axial, vue depuis l'évacuation d'air (13), avant le début de la surface de butée métallique (15).
